(19) **Europäisches Patentamt / European Patent Office / Office européen des brevets**

(11) **EP 3 418 613 A1**

(12) # EUROPEAN PATENT APPLICATION
published in accordance with Art. 153(4) EPC

(43) Date of publication:
**26.12.2018 Bulletin 2018/52**

(51) Int Cl.:
**F16K 31/04** (2006.01)

(21) Application number: **17753040.9**

(86) International application number:
**PCT/JP2017/004518**

(22) Date of filing: **08.02.2017**

(87) International publication number:
**WO 2017/141782 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.02.2016 JP 2016029229**

(71) Applicant: **Saginomiya Seisakusho, Inc.**
**Tokyo 165-0033 (JP)**

(72) Inventor: **NAKAGAWA, Taiki**
**Sayama-shi**
**Saitama 350-1395 (JP)**

(74) Representative: **Petraz, Gilberto Luigi et al**
**GLP S.r.l.**
**Viale Europa Unita, 171**
**33100 Udine (IT)**

(54) **ELECTRIC VALVE**

(57)     In an electric valve, the present invention prevents the influence of fluid pressure difference on the screw feed mechanism and prevents variations in valve-opening point and flow characteristics. A rotor shaft (4) is fixed to the magnet rotor (62) of a stepping motor (6). A valve body (5) is held by the rotor shaft (4). The rotor shaft (4) is supported by a valve housing (1)-side support member (3). A screw feed mechanism is configured from a female threaded section (32a) of the support member (3) and the male threaded section (42a) of the rotor shaft (4). By rotating the magnet rotor (62), the valve body (5) is moved in a shaft line direction (L), and opens and closes the valve port (21). A coil spring (7) is disposed above the magnet rotor (62). By means of the coil spring (7), the male threaded section (42a) is always kept in contact with the female threaded section (32a).

Fig. 1

EP 3 418 613 A1

## Description

Technical Field

The present invention relates to an electric valve for controlling flow rate of fluid such as refrigerant of an expansion valve in a refrigeration cycle of such as an air conditioner and a refrigerator.

Background Art

Conventionally, there are electric valves used in a refrigeration cycle of such as an air conditioner and a refrigerator disclosed in, for example, JP 2001-271956 A (Patent Literature 1) and JP 2006-322535 A (Patent Literature 2). In these electric valves, a magnet rotor is arranged within a case of a stepping motor (electric motor), and a needle section is provided at a bottom of a male screw shaft attached to the magnet rotor. Further, the male screw shaft composes a screw feed mechanism together with a female screw of a support member at a valve main body side, and by rotating the magnet rotor, the screw feed mechanism opens and closes a valve port with the needle section.

Citation List

Patent Literature

Patent Literature 1: JP 2001-271956 A
Patent Literature 2: JP 2006-322535 A

Summary of Invention

Technical Problem

Recently, an improvement of energy saving has been examined actively in the air conditioner and the refrigerator. An electric valve used in a refrigeration cycle thereof has also been desired similar performance. The performance desired in the electric valve is, for example, an improvement of controllability in a micro-flow rate area, or a reduction of flow rate variation.
In particular, in a large-sized air conditioner (PAC, multi-air conditioner for building, or the like), there is an application in which the electric valve must be closed. In this case, the electric valve must be opened with predetermined pulses (valve-opening point) to the stepping motor from a valve closing condition.

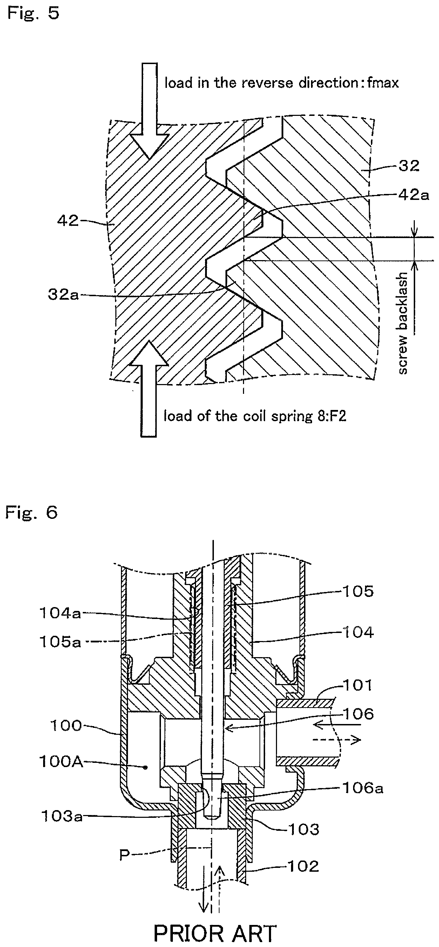

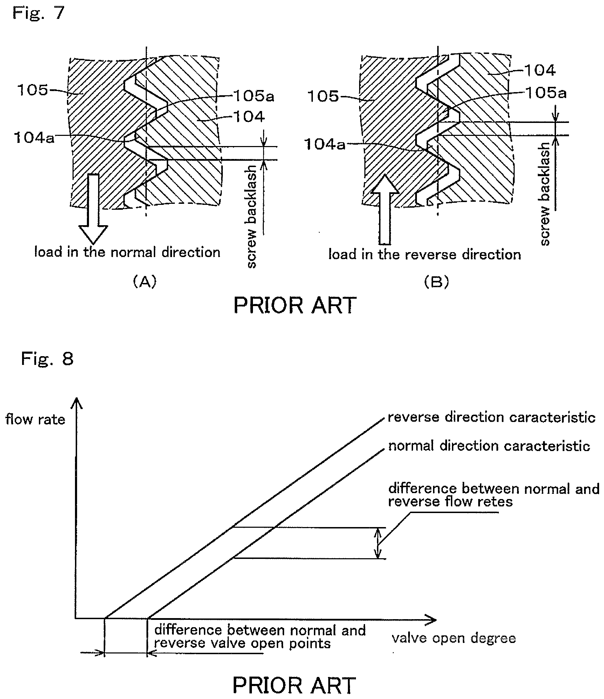

Fig. 6 shows an example of an electric valve with a screw feed mechanism similar to the conventional electric valve. Fig. 7 is an explanatory view showing a problem of the conventional electric valve. With reference to this drawing, a problem of the screw feed mechanism of the electric valve will be described. In this electric valve, a primary coupling tube 101 communicating with a valve chamber 100A is attached to a side face of a valve housing 100. A secondary coupling tube 102 and a valve seat member 103 are attached to a lower end of the valve housing 100. A valve port 103a centering around a shaft line P is formed on the valve seat member 103. Further, a support member 104 is attached to a top part of the valve housing 100, and a female screw section 104a is formed on the support member 104. Further, in the female screw section 104a, a rotor shaft 105 connected to a magnet rotor of a not-shown stepping motor is arranged with a male screw section 105a screwed with the female screw section 104a. Further, a valve body 106 is attached to the rotor shaft 105. Then, due to a screw feed mechanism of the female and male screw sections 104a, 105a with a rotation of the rotor shaft 105, the valve body 106 is moved in a direction of the shaft line P together with the rotor shaft 105, and a needle section 106a of the valve body 106 opens and closes the valve port 103a.
Incidentally, the electric valve of this kind is used such that a flow path direction of the refrigerant becomes bidirectional corresponding to switching between a cooling mode and a heating mode in a refrigeration cycle. Namely, the flow of the refrigerant switches between a normal direction flowing from the primary coupling tube 101 to the secondary coupling tube 102 (a solid arrow) and a reverse direction flowing from the secondary coupling tube 102 to the primary coupling tube 101 (a dashed arrow) . At this time, a load caused by a pressure difference of the refrigerant flowing in the normal and reverse directions is applied to the rotor shaft 105 via the valve body 106 in directions opposite to each other. Further, the screw feed mechanism has a slight clearance between the female and male screw sections 104a, 105a structurally. Therefore, when the refrigerant flows in the normal direction, as shown in Fig. 7A, a load in the normal direction is applied to the rotor shaft 105. Further, when the refrigerant flows in the reverse direction, as shown in Fig. 7B, a load in the reverse direction is applied to the rotor shaft 105. Thereby, a position of the male screw section 105a with respect to the female screw section 104a in the direction of the shaft line P is changed depending on the normal direction and the reverse direction. This displacement amount corresponds to a screw backlash by the clearance.
Fig. 8 is a flow characteristic diagram of the electric valve above. The horizontal axis indicates a valve open degree corresponding to the pulse number of the stepping motor, and the vertical axis indicates flow rate of the fluid flowing through the valve port 103a. A valve opening point when the valve starts to open is in a case that the flow rate is zero, and determined as the predetermined pulse number of the stepping motor. However, with respect to a case of the normal direction shown in Fig. 7A, in a case of the reverse direction shown in Fig. 7B, the rotor shaft 105 (valve body 106) floats in the screw backlash. Thereby, as shown in Fig. 8, in a case of the reverse direction, the characteristic is shifted in a direction that the valve open degree is reduced. Therefore, in the normal and reverse directions, a difference is generated in the flow rate (difference between normal and reverse flow rates) in the same valve open degree. In this way, owing to the clearance of the screw feed mechanism, the pressure difference between the normal and the reverse directions affects the flow rate characteristic. Incidentally, in the Patent Literatures 1 and 2, it is described that a spring cancels the backlash of the screw feed mechanism. However, the pressure of the fluid is not considered, and it leaves some improvements in this point.

An object of the present invention is, in an electric valve, to prevent the influence of fluid pressure difference on the screw feed mechanism, and to prevent variations in the valve-opening point and flow rate characteristic.

Solution to Problem

According to a first aspect of the present invention, there is provided an electric valve for controlling flow rate of fluid passing through a valve port by converting a rotational movement of a magnet rotor as a component of an electric motor into a straight movement of a valve body with a screw feed mechanism and by moving back and forth the valve body with respect to the valve port, said electric valve including:

> a valve body holding section configured to be a rotor shaft of the magnet rotor for holding the valve body; a support member for supporting the valve body holding section on a line of the shaft; and a biasing means for biasing in a direction of the line of the shaft the valve body holding section or the magnet rotor movable in the direction of the line of the shaft with a load greater than a power acting on the valve body caused by a maximum working pressure difference predetermined as a maximum pressure difference between an inflow pressure of fluid with respect to the valve port and an outflow pressure of the fluid with respect to the valve port,

wherein a male screw section is formed on one of the valve body holding section and the support member, and a female screw section is formed on the other, and the screw feed mechanism is composed of the male and female screw sections.

According to a second aspect of the present invention, there is provided the electric valve according to the first aspect,
wherein the valve body is held by the valve body holding section via a valve spring, and
wherein the valve body is biased toward the valve port with respect to the valve body holding section with a load greater than the power acting on the valve body caused by the maximum working pressure difference by the valve spring.

According to a third aspect of the present invention, there is provided the electric valve according to the first or second aspect,
wherein the biasing means is arranged opposite to the support member with respect to the valve body holding section on the line of the shaft, and biases the valve body holding section toward the support member.

According to a fourth aspect of the present invention, there is provided the electric valve according to the first or second aspect,
wherein the biasing means is arranged in between the magnet rotor and the support member on the line of the shaft, and biases the magnet rotor in a direction separating from the valve port.

Effect of the Invention

According to the first aspect of the present invention, because the valve body holding section or the magnet rotor movable in the direction of the shaft line with the screw feed mechanism is biased in the direction of the shaft line with a load greater than a power acting on the valve body caused by a maximum working pressure difference, the female and male screw sections always contact each other in the screw feed mechanism. Because the power caused by the maximum working pressure difference is a maximum power of a power affected on the screw feed mechanism by fluid, in both normal and reverse directions of flow of the fluid, a state that the female and male screw sections contact each other is always unchanged. Therefore, even if the fluid pressure becomes a pressure generating the maximum working pressure difference, the characteristic between the valve open degree corresponding to the rotational position of the magnet rotor and the flow rate of the fluid flowing through the valve port (flow rate characteristic) will not change.

According to the second aspect of the present invention, in addition to the effect of the first aspect, owing to a buffer action of the valve spring, while the needle section is prevented from biting into the valve port, even if the valve body fully closes the valve port, the valve body will not float by the maximum working pressure difference.

According to the third aspect of the present invention, in addition to the effect of the first or second aspect, because the biasing means is arranged opposite to the support member with respect to the valve body holding section on the line of the shaft, and biases the valve body holding section toward the support member, it is effective with respect to the maximum working pressure difference in order to open the valve body.

According to the fourth aspect of the present invention, in addition to the effect of the first or second aspect, because the biasing means is arranged opposite to the support member with respect to the valve body holding section on the line of the shaft, and biases the magnet rotor in a direction separating from the valve port, it is effective with respect to the maximum working pressure difference in order to close the valve body.

Brief Description of Drawings

Fig. 1 is a longitudinal sectional view of an electric valve according to a first embodiment of the present invention;
Fig. 2 is an explanatory view for explaining an action of a coil spring in the first embodiment;
Fig. 3 is a flow rate characteristic view of the electric valve in the first and second embodiments;
Fig. 4 is a longitudinal sectional view of an electric valve according to a second embodiment of the present invention;
Fig. 5 is an explanatory view for explaining an action of a coil spring in the second embodiment;
Fig. 6 is a longitudinal sectional view of an electric valve having a conventional screw feed mechanism;
Fig. 7 is an explanatory view for explaining a problem of a conventional electric valve; and
Fig. 8 is a flow rate characteristic view of the conventional electric valve.

Description of Embodiment

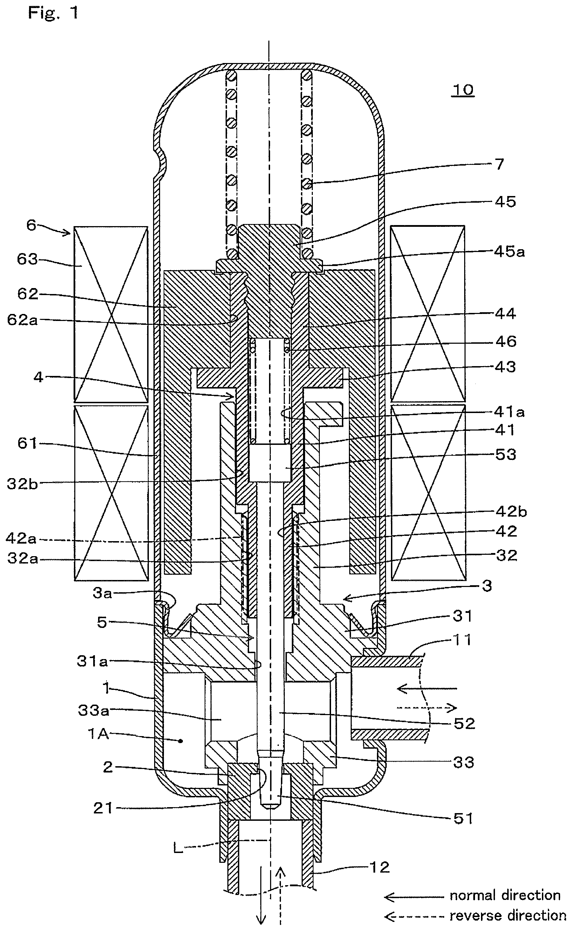

Next, an embodiment of an electric valve of the present invention will be described with reference to drawings. Fig. 1 is a longitudinal sectional view of an electric valve according to a first embodiment of the present invention. Incidentally, a concept of "up down" in a following description corresponds to up down in Fig. 1.

The electric valve of this embodiment has a substantially cylindrical valve housing 1, and an inside of the valve housing 1 is a valve chamber 1A. A primary coupling tube 11 communicating with the valve chamber 1A from a side face is attached to the valve housing 1, and a secondary coupling tube 12 is attached to a lower end of the valve chamber 1A. Further, in the valve housing 1, a valve seat member 2 is arranged at the valve chamber 1A side of the secondary coupling tube 12. The valve seat member 2 is in a columnar shape, and made of stainless steel, brass, or the like. A circular sectional shaped valve port 21 centering around a shaft line L is formed on the valve seat member 2.

A support member 3 is attached to an inside and an upper part of the valve housing 1A of the valve housing 1. The support member 3 has a base section 31 of which diameter is the same as an inner diameter of the valve housing 1, a holder section 32 formed on an upper part of the base section 31, and a joining section 33 formed on a lower part of the base section 31. so that The base section 31 of the support member 3 is fitted into the valve housing 1 so that an end of the joining section 33 of the support member 3 is coupled to the valve seat member 2. Then, a periphery of the base section 31 is pressed down with a mounting fitting 3a embedded in an upper opening of the valve housing, and the support member 3 is fixed to the valve housing 1.

The base section 31 of the support member 3 is provided with a through hole 31a into which a later-described valve body 5 is inserted. Further, a female screw section 32a, its screw hole coaxial to the shaft line L of the valve port 21 and a cylindrical guide hole 32b of which diameter is larger than outer periphery of the screw hole of the female screw section 32a are formed in the center of the holder section 32. Further, the joining section 33 is provided with a passage 33a communicating with the valve chamber 1A and the valve port 21. Then, a rotor shaft 4 as "valve body holding section" is arranged in the screw hole of the female screw section 32a and the guide hole 32b of the holder section 32.

The rotor shaft 4 has a large diameter section 41 fitted with the guide hole 32b of the support member 3, a small diameter section 42 of which diameter is smaller than the large diameter section 41, a flange section 43 abutting on a later-described magnet rotor 62, and a boss section 44 fitted with the magnet rotor 62. Further, an end of the boss section 44 is provided with a fixing fitting 45. In the rotor shaft 4, while the flange section 43 abuts on the magnet rotor 62, the boss section 44 is fitted into a fitting hole 62a of the magnet rotor 62, and the fixing fitting 45 is fixed to the boss section 44. Then, the magnet rotor 62 is held between the flange section 43 and a flange section 45a of the fixing fitting 45. Thereby, the rotor shaft 4 is fixed to the magnet rotor 62.

A male screw section 42a is formed on an outer periphery of the small diameter section 42of the rotor 4, and screwed with the female screw section 32a of the support member 3. Further, a cylindrical spring housing section 41a is formed on the large diameter section 41 of the rotor shaft 4, and a slide hole 42b is formed in the center of the small diameter section 42. Then, the valve body 5 is inserted into the slide hole 42b from the spring housing section 41a.

The valve body 5 is made of stainless steel, brass, or the like, and has a needle section 51 at a lower end, a columnar bar-shaped rod section 52, a head section 53 of which diameter is larger than the rod section 52. The head section 32 is fitted into the spring housing section 41a of the rotor shaft 4, and the rod section 52 is inserted into the slide hole 42b. Further, the rod section 52 extends from the insertion hole 31a via the passage 33a of the support member 3 to the valve seat member 2. Then, a valve spring 46 is arranged in the spring housing 41a of the rotor shaft 4, and the fixing fitting 45 is fixed to the boss section 44. Thereby, the valve spring 46 is arranged in a compressed manner between the fixing fitting 45 and the head section 53 of the valve body 5. Thereby, the valve body 5 is held by the rotor shaft 4 while biasing toward the valve seat member 2.

A case 61 of a stepping motor 6 is airtightly fixed to upper ends of the valve housing 1 and the mounting fitting 3a by welding or the like. The magnet rotor 62, of which outer periphery is magnetized in a multipolar manner, is rotatably provided in the case 61. Further, a stator coil 63 is arranged around an outer periphery of the case 61. When a pulse signal is applied to the stator coil 63, the stepping motor rotates the magnet rotor 62 corresponding to the pulse number.

A coil spring 7 as "biasing means" is arranged at an upper part of the magnet rotor 62 in the case 61. One end of the coil spring 7 abuts on a ceiling section of the case 61, and the other end of the coil spring 7 abuts on the flange section 45a of the fixing fitting 45. The coil spring 7 is arranged in a compressed manner between the case 61 and the fixing fitting 45 (a part of the rotor shaft 4). Thereby, the coil spring 7 is arranged opposite to the support member 3 with respect to the rotor shaft 4 as the valve body holding section on the shaft line L. Then, the coil spring 7 always biases the rotor shaft 4 and the magnet rotor 62 toward the support member 3.

According to the above configuration, the rotor shaft 4 is rotated owing to the rotation of the magnet rotor 62, the rotor shaft 4 is displaced straight in the shaft line L direction (vertical direction) owing to the screw feed action of the male screw section 42a of the rotor shaft 4 and the female screw section 32a of the support member 3, and the needle section 51 of the valve body 5 is moved back and forth relative to the valve port 21 of the valve seat member 2. Thereby, the valve open degree of the valve port 21 is changed, and for example, the flow rate of the refrigerant flowing from the primary coupling tube 11 to the secondary coupling tube 12 is controlled. Further, the needle section 51 abuts on an opening edge of the valve port 21 of the valve seat member 2 to close the valve port 21. Incidentally, when the needle section 51 abuts on the valve seat member 2, the valve spring 46 is compressed to produce a buffering action, and prevents the needle section 51 to bite into the valve port 21. Incidentally, though illustration is omitted, a fixed lower end stopper and a fixed upper end stopper are provided at the support member 3 side, and a movable lower end stopper and a movable upper end stopper are provided at the magnet rotor 62 side. Thereby, a rotation range of the magnet rotor 62 (a lift range of the valve body 5) is restricted.

Here, corresponding to the switching between the cooling mode and the heating mode in the refrigeration cycle, the electric valve 10 has a normal direction where the fluid (refrigerant) flows in from the primary coupling tube 11 and flows out from the secondary coupling tube 12 as denoted by the solid arrow in Fig. 1, and a reverse direction where the fluid flows in from the secondary coupling tube 12 and flows out from the primary coupling tube 11 as denoted by the broken arrow in Fig. 1. In both directions, the fluid pressure is high at the inflow side, and low at the outflow side. A power caused by this pressure difference acts on the valve body 5.

Meanwhile the electric valve 10 works as a throttle device in the refrigeration cycle, the inflow side of the fluid is a condenser side, and the outflow side of the fluid is an evaporator side. Further, the fluid pressure at the condenser side is a pressure at a discharge side of a compressor, and the fluid pressure at the evaporator side is a pressure at an intake side of the compressor. Because a driving condition of the compressor in the refrigeration cycle is predetermined depending on an environment of usage of an air conditioner or the like, the maximum pressure difference between the inflow side pressure (high pressure) and the outflow side pressure (low pressure) with respect to the electric valve 10 is predetermined, and this maximum pressure difference is "the maximum working pressure difference ΔPmax".

When a valve bore area of the valve port 21 is A, the maximum load fmax acts on the valve body 5 due to this "the maximum working pressure difference ΔPmax" is

$$fmax = A *\Delta Pmax.$$

Further, a load F1 of the coil spring 7 (spring power) is set to

$$F1 > fmax.$$

Further, a load ff of the valve spring 46 (spring power) is also set to

$$ff > fmax.$$

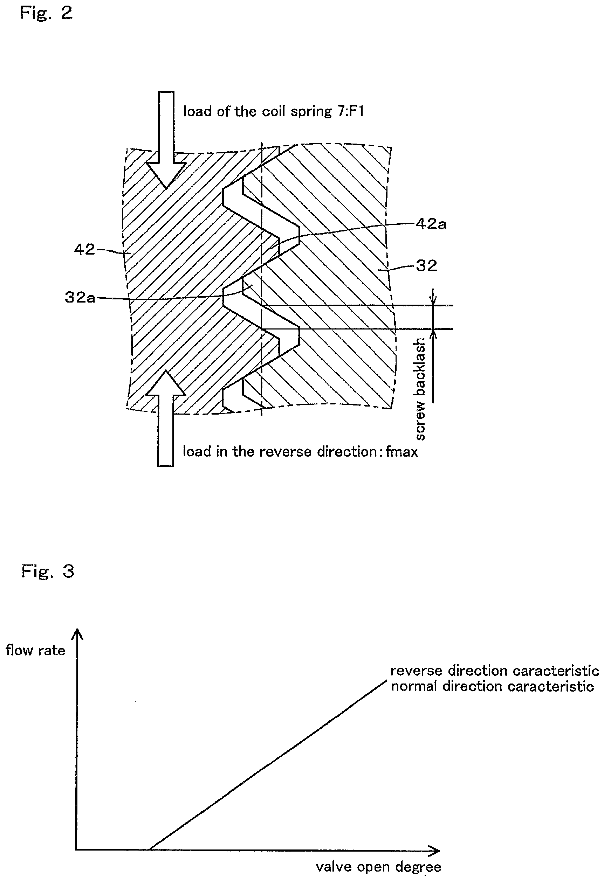

Fig. 2 is an explanatory view for explaining an action of the coil spring 7. Incidentally, in an embodiment shown, the maximum load fmax due to the maximum working pressure difference ΔPmax acts on the rotor shaft 4 from underneath. As shown in Fig. 2, there is a screw backlash between the male screw section 42a of the rotor shaft 4 and the female screw section 32a of the support member 3. However, due to the load F1 of the coil spring 7, the male screw section 42a of the rotor shaft 4 always abuts on the female screw section 32a of the support member 3. Because the load F1 of the coil spring 7 is larger than the load fmax due to the maximum working pressure difference, this state that the male screw section 42a abuts on the female screw section 32a is always unchanged in the normal and reverse directions of flow of the fluid. Therefore, as shown in Fig. 3, the flow rate characteristic between the valve open degree (rotational position of the magnet rotor 62) and the flow rate flowing through the valve port 21 is the same in both the normal and reverse directions, and there is no difference between the valve-opening points. Incidentally, because the load ff of the valve spring 46 (spring power) is also larger than the load fmax, in the valve closing state, the valve body 5 never floats.

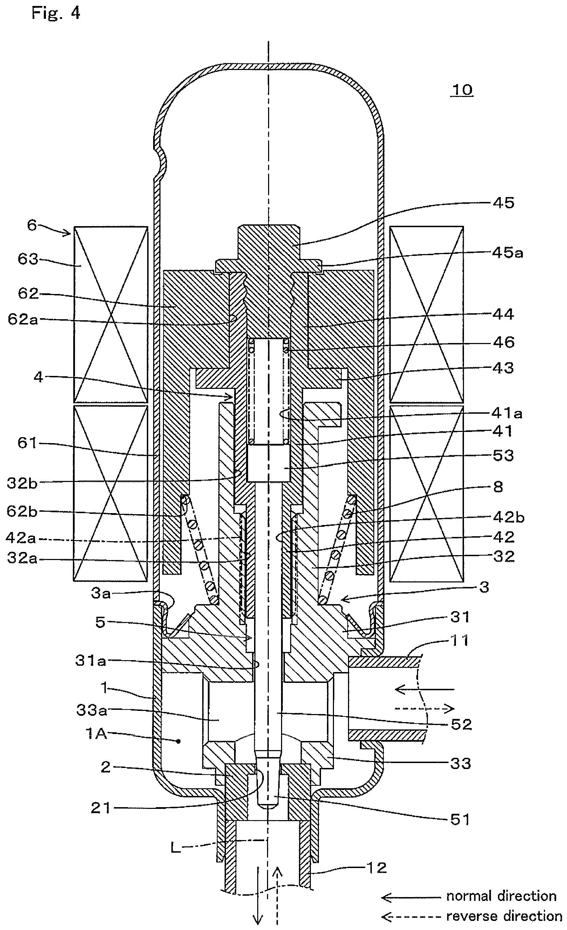

Fig. 4 is a longitudinal sectional view of an electric valve according to a second embodiment. In the second embodiment, the same or corresponding elements are denoted by the same reference signs. These elements denoted by the same reference signs have the similar function effects with the similar configurations, and the overlapped explanations will be properly omitted. In this second embodiment, instead of the coil spring 7 of the first embodiment, a coil spring 8 as "biasing means" is provided. The coil spring 8 is in a truncated cone shape, and arranged between the magnet rotor 62 and the support member 3 on the shaft line L. Then, the coil spring 8 biases the magnet rotor 62 in a direction away from the valve port 21. In this second embodiment also, the load F2 (spring force) of the coil spring 8 is set to

$$F2 > fmax.$$

Fig. 5 is an explanatory view for explaining an action of the coil spring 8. Incidentally, in an embodiment shown, the maximum load fmax due to the maximum working pressure difference ΔPmax acts on the rotor shaft 4 from above. In this second embodiment also, due to the load F2 of the coil spring 8, the male screw section 42a of the rotor shaft 4 always abuts on the female screw section 32a of the support member 3. Because the load F2 of the coil spring 8 is larger than the load fmax due to the maximum working pressure difference, this state that the male screw section 42a abuts on the female screw section 32a is always unchanged in the normal and reverse directions of flow of the fluid. Therefore, similar to the first embodiment shown in Fig. 3, the flow rate characteristic between the valve open degree (rotational position of the magnet rotor 62) and the flow rate flowing through the valve port 21 is the same in both the normal and reverse directions, and there is no difference between the valve-opening points. Incidentally, a thrust washer having a good lubricity may be interposed between the coil spring 8 and the magnet rotor 62, or both between the coil spring 8 and the support member 3 and between the coil spring 8 and the magnet rotor 62.

In the embodiments above, a case that the male screw section is formed on the rotor shaft (valve body holding section) at the magnet rotor side, and the female screw section is formed on the support member at the valve housing side has been explained. However, the present invention can apply to a screw feed mechanism in which the male screw section and the female screw section are reversed. For example, a support member having a male screw section on an outer periphery is provided at a valve housing side, and a rotor shaft having a female screw section screwed with this male screw section is provided at a rotor side. Further, a valve body extends to a valve port penetrating the support member having this male screw section, and an end of the valve body opposite to the valve port is held by the rotor shaft having the female screw section. Then, a biasing means may bias the rotor shaft (valve body holding section) movable in a shaft line direction or the magnet rotor.

The embodiments of the present invention have been described above in detail with reference to the drawings. However, specific configurations are not limited to these embodiments, and those with design modifications or the like within a scope not departing from the principal of the present invention are also included in the present invention.

Reference Signs List

| | |
|---|---|
| 1 | valve housing |
| 1A | valve chamber |
| 11 | primary coupling tube |
| 12 | secondary coupling tube |
| 2 | valve seat member |
| 21 | valve port |
| 3 | support member |
| 32 | holder section |
| 32a | female screw section |
| 4 | rotor shaft (valve body holding section) |
| 41 | large diameter section |
| 42 | small diameter section |
| 42a | male screw section |
| 42b | slide hole |
| 43 | flange section |
| 44 | boss section |
| 45 | fixing fitting |
| 45a | flange section |
| 5 | valve body |
| 51 | needle section |
| 52 | rod section |
| 53 | head section |
| 6 | stepping motor |
| 62 | magnet rotor |
| 7 | coil spring (biasing means) |
| 8 | coil spring (biasing means) |
| L | shaft line |

**Claims**

1. An electric valve for controlling flow rate of fluid passing through a valve port by converting a rotational movement of a magnet rotor as a component of an electric motor into a straight movement of a valve body with a screw feed mechanism and by moving back and forth the valve body with respect to the valve port,
said electric valve comprising:

a valve body holding section configured to be a rotor shaft of the magnet rotor for holding the valve body;
a support member for supporting the valve body holding section on a line of the shaft; and
a biasing means for biasing in a direction of the line of the shaft the valve body holding section or the magnet rotor movable in the direction of the line of the shaft with a load greater than a power acting on the valve body caused by a maximum working pressure difference predetermined as a maximum pressure difference between an inflow pressure of fluid with respect to the valve port and an outflow pressure of the fluid with respect to the valve port,

wherein a male screw section is formed on one of the valve body holding section and the support member, and a female screw section is formed on the other, and the screw feed mechanism is composed of the male and female screw sections.

2. The electric valve as claimed in claim 1,
wherein the valve body is held by the valve body holding section via a valve spring, and
wherein the valve body is biased toward the valve port with respect to the valve body holding section with a load greater than the power acting on the valve body caused by the maximum working pressure difference by the valve spring.

3. The electric valve as claimed in claim 1 or 2,
wherein the biasing means is arranged opposite to the support member with respect to the valve body holding section on the line of the shaft, and biases the valve body holding section toward the support member.

4. The electric valve as claimed in claim 1 or 2,
wherein the biasing means is arranged in between the magnet rotor and the support member on the line of the shaft, and biases the magnet rotor in a direction separating from the valve port.

Fig. 1

Fig. 2

load of the coil spring 7:F1

42a

42

32

32a

screw backlash

load in the reverse direction:fmax

Fig. 3

flow rate

reverse direction caracteristic
normal direction caracteristic

valve open degree

Fig. 4

Fig. 5

load in the reverse direction : fmax

32

42a

42

32a

screw backlash

load of the coil spring 8:F2

Fig. 6

105

104a

105a

104

101

106

100

100A

106a

103a

103

P

102

PRIOR ART

Fig. 7

105
105a
104
104a
load in the normal direction
screw backlash
(A)

104
105a
105
104a
load in the reverse direction
screw backlash
(B)

PRIOR ART

Fig. 8

flow rate
reverse direction caracteristic
normal direction caracteristic
difference between normal and reverse flow retes
difference between normal and reverse valve open points
valve open degree

PRIOR ART

# EP 3 418 613 A1

## INTERNATIONAL SEARCH REPORT

International application No.

PCT/JP2017/004518

### A. CLASSIFICATION OF SUBJECT MATTER
F16K31/04(2006.01)i

According to International Patent Classification (IPC) or to both national classification and IPC

### B. FIELDS SEARCHED

Minimum documentation searched (classification system followed by classification symbols)
F16K31/04

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2015/002063 A1 (Aisan Industry Co., Ltd.), 08 January 2015 (08.01.2015), paragraph [0039]; fig. 2 & US 2016/0146159 A1 paragraph [0061]; fig. 2 & JP 5996799 B2 & DE 112014003092 T5 & CN 105358886 A & KR 10-2016-0017082 A | 1-4 |
| A | WO 2007/145311 A1 (Mikuni Corp.), 21 December 2007 (21.12.2007), paragraphs [0011], [0018], [0039]; fig. 3 & JP 2007-332904 A | 1-4 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 March 2017 (22.03.17) | 04 April 2017 (04.04.17) |

| Name and mailing address of the ISA/ Japan Patent Office 3-4-3,Kasumigaseki,Chiyoda-ku, Tokyo 100-8915,Japan | Authorized officer

Telephone No. |

Form PCT/ISA/210 (second sheet) (January 2015)

**INTERNATIONAL SEARCH REPORT**

International application No.

PCT/JP2017/004518

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-52653 A  (Keihin Corp.), 19 February 2004 (19.02.2004), claims 1, 5; paragraphs [0025], [0037], [0067] to [0068], [0075] to [0076], [0081] to [0084], [0088]; drawings (Family: none) | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001271956 A

- JP 2006322535 A